# EUROPEAN PATENT APPLICATION

(11) **EP 2 950 556 A1**
(43) Date of publication of application: **02.12.2015**
(21) Application number: 14169877.9
(22) Date of filing: 26.05.2014
(51) Int. Cl.: H04W 4/00

(54) **Application controlled security element selection**

(71) Applicant: Teleena Holding B.V., 3431 HK Nieuwegein (NL)
(72) Inventor: Baijens, Dirk, 3431 HK Nieuwegein (NL); Smit, Timo, 3431 HK Nieuwegein (NL); Macridis, Philip, 3431 HK Nieuwegein (NL)
(74) Representative: Nederlandsch Octrooibureau

(57) **Abstract**

The invention provides a wireless communication device, comprising:
- a first means for receiving a first secure element, SE (44)
- a second means for receiving a second SE (45);
- an application processor (43) for executing user applications,
- a first transceiver unit (48) for connecting to a first wireless network (14) using the first SE

characterized by
- a second transceiver unit (49) for connecting to a second wireless network (15) using the second SE, wherein the application processor (43) is configured to support exchange of authentication messages between the user application (41) and the second SE (45).

## Description

### Field of the invention

The invention relates to a wireless electronic device and for a method for connecting to a wireless network. In particular, the invention relates to a device and method for an application-based selection of and connection to a wireless network.

### Background of the invention

Mobile computing devices including smartphones, feature phones, tablets, wearables achieve their connectivity with mobile networks through multiple radios supporting many different technologies, e.g.: GSM, GPRS, EDGE, HSPA and LTE for cellular services. Also Wi-Fi, Bluetooth and GPS each have their own radio interface. For convenience, we will take the example of smartphones throughout the text, but this invention applies to all mobile computing devices mentioned above.

Typically smartphones use a single SIM (Subscriber Identity Module) card for authentication to a single cellular network at a time. This means that all cellular services are typically dealt with using the services of the 'home' operator, or the "visited" operator when roaming.

Smartphones with a dual SIM feature can authenticate to two networks, with each respective SIM authenticating to a particular provider's network. The user can then for example send SMSs using one provider and receive voice transmissions via another. One of the dual SIMs may also be used to set up a data connection.

Today's cellular services are primarily provided by a Mobile Network Operator (MNO). The MNO provides the user a SIM card for authentication (access) to a cellular network. The MNO offers also services on top of this access: typically voice, SMS and data services as an integrated package.

Modern smart phones and tablets have a range of transceiver (transmitter/receiver) units for GSM, UMTS, LTE, Wi-Fi, Bluetooth and so on. Normally several transceivers are integrated in a 'System-on-a-Chip' (SoC). A SoC is an Integrated Circuit (IC) that has multiple functions *on board* that together form the baseband transceiver. These functions for a baseband transceiver are the RF transceiver, analog/mixed-signal blocks, DSP, processor and RAM/ROM.

A baseband processor normally has its own operating system and interacts with the generic OS via an API. Commonly this API is a (Hayes) AT command set. The commands include all functions to operate the baseband transceiver, such as: network selection and registration, setting up calls, sending text messages, managing data sessions, reporting signal level and quality, etc. This command set is described in 3GPP TS 27.007. Besides this AT command API in many cases also proprietary APIs are available.

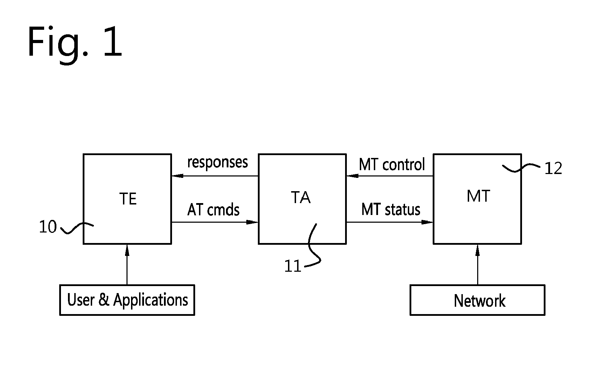

Figure 1 schematically shows the functional blocks that is used for the AT command set described in [0007] and as defined by standardization bodies. It relies on a concept from the 1980's. The TE (Terminal Equipment) 10 is in modern smartphone implementations known as application processor. The TA (Terminal Adaptor) 11 and MT (Mobile Terminal) 12 are in today's smart phones integrated in the BB (BaseBand) Transceiver. Often the baseband transceiver can access some of the hardware components like the SIM card slot directly. This means that operations like authentication to a network are performed directly between the baseband and SIM, and there is no interaction between SIM and application processor.

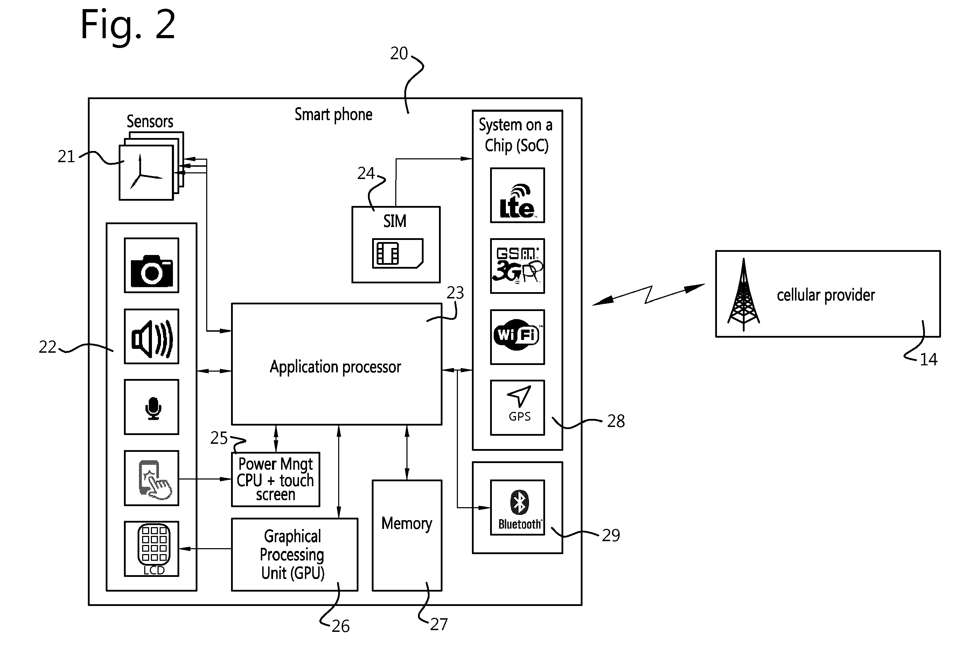

Figure 2 schematically shows a conventional mobile communication terminal 20. Terminal 20 comprises sensor 21, input/output (IO) modules 22 (for example including a camera, speakers, microphone, touch panel, and display), and an application processor 23 (similar to TE 10). Other connected modules include power management module 25, Graphics Processing Unit 26, and memory 27.

As was mentioned, modern smart phones and tablets (the same is also extended to all wearable and other communications devices) have a range of transceivers (transmitter/receiver) for GSM, UMTS, LTE, Wi-Fi, Bluetooth, GPS (receiver only) and so on, which in the present example are included in SoC 28. In addition, a Bluetooth module 29 is provided for short range communications.

Qualcomm is one of the leading vendors of SoCs 28 for smart phones. Other big vendors that produce SoCs, chipsets and/or baseband modules are Broadcom, MediaTek, Texas Instruments, Freescale, Nvidia, Sierra Wireless and Infinion. Their chips or chipsets contain typically the radios for cellular services, GPS, Bluetooth and Wi-Fi. Most SoCs, chipsets and modules for this purpose (not only from Qualcomm) use ARM processors.

The mobile communication terminal 20 provides a slot for receiving a physical SIM 24. The physical SIM card 24 itself typically is also a SoC. It contains a CPU, memory and an I/O interface. A low level command set is used for accessing the SIM file system and to trigger for example cryptographic functions. The structure of these commands is defined in ISO 7816-3. The I/O interface for the SIM is typically not directly accessible for end user applications.

SIMs can have different form factors. Today's most commonly used form factors for SIMs are based on Smart Cards or Universal Integrated Circuit Cards (UICC) and have sizes of 15x25 mm (2FF or mini-SIM), 12x15 mm (3FF or micro-SIM) or 8.8x12.3 mm (4FF or nano-SIM). Embedded SIMs, that are physically non-replaceable are becoming more popular. Instead of a physical 'device' the SIM can also be seen as an application inside a Secure Element (SE). An SE typically hosts multiple applications, i.e. for payment, transit services, loyalty, etc. An SE is a physical entity that is considered 'secure' due to the fact that it is a separate piece of hardware containing specialized software for abovementioned functions. However, there are also SEs that are completely software-based.

### Summary of the invention

The invention provides a wireless communication device, comprising:
- a first means for receiving a first secure element, SE
- a second means for receiving a second SE ;
- an application processor for executing user applications,
- a first transceiver unit for connecting to a first wireless network using the first SE characterized by
- a second transceiver unit for connecting to a second wireless network using the second SE, wherein the application processor is configured to support exchange of authentication messages between the user application and the second SE .

The first and/or second means for receiving an SE can be a slot for receiving an external UICC (commonly called a "SIM card"). It is also possible that the SE is already provided as part of the mobile device, for example as an embedded UICC. The place on the circuit board where the eUICC is placed is then the means for receiving an SE. Also software-based SEs are considered by the invention. According the invention, an SE can be a physical device (with or without software applications) such as a UICC or it can be a fully software-based equivalent thereof. In embodiments in which an SE is fully software-based, the memory in which the SE is stored is considered the means for receiving the SE.

The invention thus provides a wireless communication device without requiring that the first or second SEs are already received (installed), but at least arranged to be able to interact with the SEs when they are received, as described above. The invention also provides a wireless communication device with the SEs already installed.

By allowing a user application to directly interact with a SE in order to authenticate to a wireless network greatly increases flexibility. In known devices, this functionality is limited to the firmware of the baseband SoC.

Known devices typically have only one SE and in dual SIM solutions, typically only one SIM is enabled for data connections. In any event, in conventional single and dual SIM solutions, the data connection is made available for the entire software stack. There is no possibility in conventional systems for individual applications to interact with a SE to set up a connection. The flexibility according the invention allows new business models, for example sponsored applications which have a special arrangement with a wireless network operator.

This invention provides a way to simultaneously use multiple radio interfaces with optionally different operators using multiple, optionally different, authentication methods. In addition to the user-selected or SIM card selected Mobile Network Operator, the selection of an additional radio interface can now be based on the actual application or application settings.

In an embodiment, according the invention, the first and the second transceiver units both support cellular data connections, for example one or more of a 2G, 3G, 4G, or later generation digital cellular connections. Both transceiver units could have essentially the same capabilities.

In an embodiment according the invention, the second SE comprises an application authentication element, such as an app authentication application, and a network authentication element, such as a SIM application, and the exchange of authentication messages between the user application and the second SE causes the application authentication element to authorise the network authentication element for connecting to the second wireless network.

In an embodiment according the invention, a user application first triggers the second SE that authorizes the user application to use the second transceiver unit for transmitting and receiving user application data packets.

In an embodiment according the invention, the application processor is configured to authenticate to a network using the second SE by executing a user application including instructions for authenticating the application by the second SE and using the application authentication as authorization method for authentication to the network.

In an embodiment according the invention, the user application is provided with means to authenticate itself to the SE. The means can comprise a cryptographic function.

In an embodiment according the invention, the user application is distinguished from other user applications by addition of a specific user interface element, such as a visual indicator, to an icon, the application name text or other user interface representation of the user application. Other possibilities: use different font size, colour or effect, or a visual effect such as a shade, different edge line around an icon, or a colour effect in the icon.

In an embodiment according the invention, the application processor is directly connected to the second SE for interacting with the second SE. In an alternative embodiment according the invention, the application processor is configured to interact with the second SE via the first and/or second transceiver units.

In an embodiment according the invention, the connection to the first network and/or the connection to the second network is a data connection, in particular a packet-switched data connection.

In an embodiment according the invention, the first and/or the second SE to be received by the wireless communication device is one of a standard subscriber identity module, SIM, card, an embedded SE, such as an embedded UICC (eUICC), a Secure Digital (SD) card, or a virtual/soft SIM (vSIM/softSIM).

In an embodiment according the invention, the device is configured to maintain the connection to the second wireless network simultaneously with the connection to the first wireless network. When more than one transceiver unit is simultaneously in use, each transceiver unit may use a different network identifier, for example a different International Mobile Equipment Identity (IMEI).

In an embodiment according the invention, the connection to the second wireless network has a different data transfer capacity than the connection to the first wireless network.

In an embodiment according the invention, each of the wireless network connections is one of a second generation (2G), third generation (3G), fourth generation (4G), or fifth generation (5G), cellular connection, or any later generations. The second wireless network connection can be of a earlier or later generation than the first wireless connection.

In an embodiment according the invention, the first SE and the second SE are configured to perform different authentication methods.

In an embodiment according the invention, the first or the second wireless connection is a Wireless Local Area Network (WLAN), or Wi-Fi connection.

In an embodiment according the invention, each of the at least two transceiver units is further configured to request authentication to one SE to register to a specific cellular network.

In an embodiment according the invention, the SE comprises an SE controller, wherein an application processor of the wireless device is configured to authenticate the SE controller to access one of the at least two transceiver units, and authenticate said transceiver unit to register to a specific cellular network.

In an embodiment according the invention, the first and the second transceiver units form an integrated unit that is controlled via a single control link.

The invention also provides a method for cellular network selection by a wireless communication device comprising at least two transceiver units and at least two secure elements, SEs, the method comprising the steps of:
- running an application using an application processor of the wireless communication device;
- under the control of the application, authenticating at least one of the at least two SEs.

The method can further have any of the steps described in reference to the wireless communication device above.

This invention allows Original Equipment Manufacturers (OEMs) and non-Telco service providers, sometimes known as Over-The-Top (OTT) providers, to offer network access to users directly linked to their application. The method also allows application or content providers to offer a complete service including the actual mobile data usage required for the application, thereby reducing user concerns of unexpected data usage fees from their traditional MNO.

The invention allows for different radio path and different charging and pricing to apply for the data specifically used by the application.

### Brief description of the Figures

On the attached drawing sheets,
- figure 1 schematically shows the functional blocks of a mobile communication terminal as defined by standardization bodies.;
- figure 2 schematically shows a conventional mobile communication terminal;
- figure 3a schematically shows a software stack of mobile communication terminal according to an embodiment of the invention;
- figure 3b schematically shows a software stack of an Android-based system according to an embodiment of the invention;
- figure 4 schematically shows a mobile communication terminal according to an embodiment of the invention;
- figure 5 schematically shows a method of setting up a network connection; according to an embodiment of the invention;
- figure 6 schematically shows a method of running a sponsored application according to an embodiment of the invention; and
- figure 7 schematically shows a user interface screen of a mobile communication terminal according to an embodiment of the invention.

### Detailed description

The invention will be described mainly with exemplary references to smart phones. However, it is understood that the invention may be applied to general wireless communication devices (in particular wireless cellular communication devices) including, but not limited to, mobile phones, (portable) computers, tablet computers, Internet-of-Things appliances, Machine-to-Machine communication appliances, wearable communication devices, smart meters, security devices, automotive (emergency) applications, etc. Devices may be portable or installed in a fixed position.

Modern smart phones like the one shown in figure 2 have a variety of network interfaces; typically interfaces for cellular services (2G/3G, LTE), Wi-Fi and Bluetooth. It's a challenge for the manufacturers of smart phones and its modules to keep up with the evolutions of the various technologies. This is the main reason why the higher end devices have more separated hardware components that support the latest technologies, and the lower end devices use further integrated components, but may lag by one technology 'generation'.

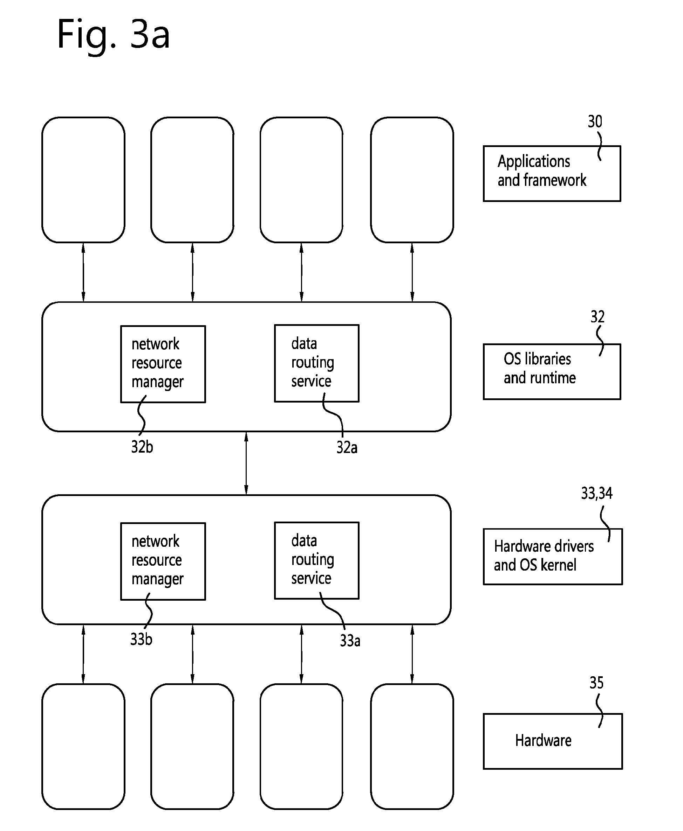

Figure 3a schematically shows a software stack of a mobile communication terminal according to an embodiment of the invention. At the top, an applications layer 30 is provided. The level below that is for the Operating System (runtime) libraries 32. The third level is for hardware drivers (forming a Hardware Abstraction Layer) 33 and the Operating System kernel 34. Finally, the fourth level represents the hardware modules 35.

According the invention, the OS library layer 32 can provide a data routing service 32a and a network resource manager 32b. The OS / hardware driver layer 33 can also provide a data routing service 33a and a network resource manager 33b. As will be described in more detail below, the data routing service can facilitate data services for applications, so that a user application which is authorised to use a second SE will use the connection setup through that second SE for data services, while other applications use the default data service. The network resource manager can facilitate applications in their interactions with the second SE.

According the invention, the hardware and software is configured so that from the application layer 30 it is possible to interact with the SIM, via hardware layer 35. This interaction can be done directly with the SIM (using a hardware driver provided by the OS) or via an interface of the transceiver hardware (again using a hardware driver). Other ways of enabling this interaction will be available for a skilled person.

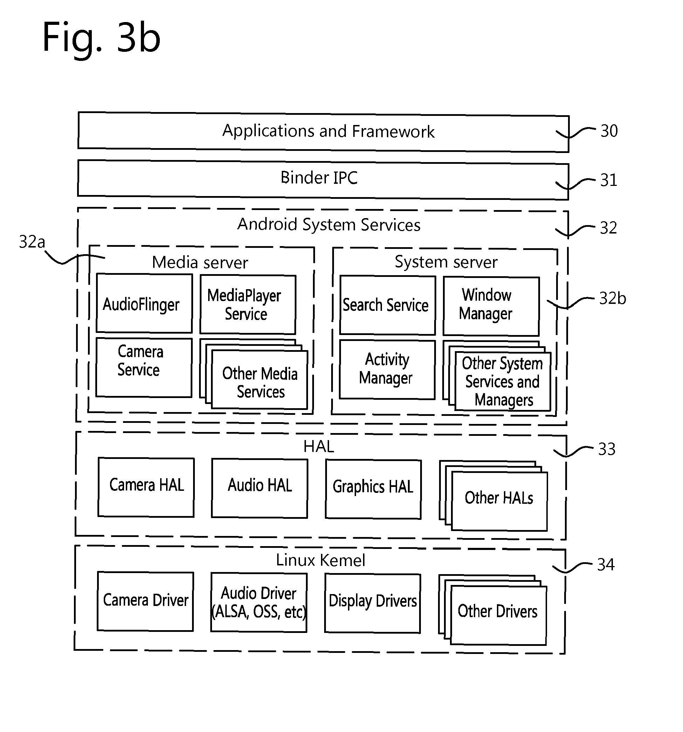

Figure 3b schematically shows an Android-based software stack of mobile communication terminal according to an embodiment of the invention. The Android Operating System (OS) is here used as an example only, the invention is not limited to any particular OS. A number of operating systems are being used for smart phones. Apple uses iOS, Blackberry has Blackberry OS, Nokia has a Windows OS, but Android is the most widely used OS for many different hardware platforms from many different handset vendors at the moment. The following section illustrates how Android OS and hardware resources are accessed. The other OSs operate in a similar way.

Google's Android is an open source operating system. This is the main reason why the OS has been adopted by many leading device manufacturers including Samsung, HTC, Huawei, Sony-Ericsson and Lenovo. Although Android is processor agnostic, it is most commonly used with ARM chipsets.

The operating system runs on top of a Linux kernel 34. Above the kernel level, a Hardware Abstraction Layer (HAL) 33 is provided, for hardware-independent access to modules of the terminal. On top of the HAL 33, the Android systems services 32 comprise media server 32a and system server 32b. Above the system services 32 is the Binder Inter-process Communication (IPC) module 31. Finally, the top of the software stack is formed by application framework 30.

Applications on Android run in a sandbox environment where all app specific data is stored. Even local databases can be setup in this sandbox environment. Applications for Android, or Apps, are generally written in Java. There are different levels of access to resources using the Application Provisioning Interfaces (APIs). Before some of the device's resources can be used they need to have permission from the end user (i.e. GPS for user privacy, or cellular services for both privacy and cost reasons). Permission at this level is given as a one-time question on installation of the app. Some resources are not accessible from an application level 30 because of security reasons. Access to the SIM card is one example.

The application framework 30 interacts with the Binder IPC mechanism 31 to allow applications to communicate with each other and the lower level System Services 32. The Android system services 32 interact with the underlying Linux kernel 34 via a Hardware Abstraction Layer (HAL) 33. These APIs are typically built into shared library modules (.so files) and written in C. Examples for HALs are: sensors HAL, camera HAL, Bluetooth HAL, etc.

In an embodiment of the invention, a HAL is provided to allow an application to interact with a secure element such as a SIM. By default, Android does not offer an interface for interacting with the SIM since, as was previously explained, the baseband transceiver unit, a hardware component, does this without the OS being involved.

The invention is based on a slightly different hardware and software architecture of a smart phone. 'Legacy' smart phone architectures assume that the application processor accesses only one cellular technology at the time. This is a logical approach from the perspective that a user doesn't want to pay for multiple cellular subscriptions, and that only one radio is active at the time to preserve power consumption. However, business models are changing.

When cellular technologies were mass deployed in the early and mid nineties, the services (voice, text) that came along with the access to the network were offered by the mobile operators. Apple introduced the iPhone in 2007, and App store in 2008. The App store allowed developers to build applications for the iPhone (and later the iPad) that were available for the whole iPhone user community. Services could now easily be offered by third party app developers instead of solely by the network operators. Later Google introduced Android together with its Android Market, later renamed Play Store.

Now there may be a large number of third party application service providers active on a mobile terminal, but there is still only one SIM card for access to a cellular network.

It is acknowledged that some smart phones support multiple SIM slots (this is supported in 3GPP TS 27.007 by the command 'set card slot' +*CSUS*). This type of phones are often used by people who want to keep business and private subscriptions strictly separated (but don't want to carry two handsets) or by people who have subscriptions from operators in different countries, and want to benefit from local rates when they are in either country (and remain reachable). These dual-SIM handsets are typically setup for handling voice and text services from different operators simultaneously. Data services can be used by selecting one of the two available SIM cards. There are no known handsets that support simultaneous active dual cellular data services.

In any event, none of these dual SIM handsets allow or enable an application to select a data provider and setup a data connection *specifically for that application.*

A mobile terminal according to an embodiment of the invention allows an application access to a Secure Element to setup a further connection with a network provider. Below a number of different exemplary Secure Element types are discussed.

A UICC is a Secure Element (SE) that can contain multiple applications; the SIM is just one. Embedded Universal Integrated Circuit Cards (eUICCs, also e-SIM) are the latest generation form factor for SIM cards. In fact it is more than just a form factor for a SIM. Because these cards are 'embedded', they are more difficult (undoable) to physically replace. This way of embedding the UICC is primarily intended for Machine-to-Machine (M2M) devices, but can also be used for consumer devices. Therefore the eUICC is defined with a framework of standards that allow remote provisioning and re-provisioning of all parameters on the card. This allows for example the issuer of the card to provision the credentials for different network operators Over-The-Air (OTA). GSMA published the final (v1.0) version for provisioning eUICC in December 2013. The described provisioning methods are however also applicable for other form factors of UICCs when these contain the relevant GlobalPlatform structure.

One usage scenario according the invention is as follows. An application is downloaded from an application server by a user of a mobile terminal. The mobile terminal already comprises a number of Secure Elements (SEs) in form factors as UICCs or eUICCs. One of these SEs is provisioned with a SIM application that communicates with and is authorized by a second application on the same SE, resulting in an authentication 'chain'. The second application on the SE may be installed for example triggered by input provided by the user when downloading the application. The downloaded application includes the authentication means required to authenticate the now provisioned SE. As a result, the application is enabled to use the provisioned SE to set up a network connection specifically for use by the application.

Another similar method is using software based virtual SIMs; vSIMs also known as softSIMs. This type of SIM is not a dedicated physical piece of hardware, but a vendor-specific simulation of a physical SIM in software. The fact that it is purely software makes it relatively easy to integrate in existing hardware architectures, but at the same time the vSIM is more vulnerable for security breaches. In the present application, it is understood that a Secure Element can also be a software solution such as a vSIM or softSIM.

A vSIM or softSIM could also be provisioned OTA, so that the above described usage scenario also applies to this type of Secure Element.

Host Card Emulation (HCE) is a software based emulation architecture of a Secure Element. The HCE architecture was originally setup to emulate NFC (Near Field Communication) cards. HCE is supported in the latest Android and Blackberry OSs.

In an embodiment, the components and features described above are created to allow for example an OTT application provider to offer differently-charged and potentially different mobile network supported service to a user, independent of the primary cellular provider. This will help reassure users that their normal MNO data allowance will not be affected by potentially bandwidth-hungry applications including video. It makes a form of "sponsored" applications possible, i.e. applications that use data transmissions services in a way that is not registered (and is therefore not billed) by the default (legacy) data network provider.

An embodiment leverages the fact that in most smart phones already multiple radio transceivers are available (or at least the chips), and thus limited hardware changes are needed. The only additional hardware (or software) part is a Secure Element (SE; in cellular networks this is often the physical SIM card) or software based equivalent.

Furthermore the way the different radios are controlled is different from existing methods: multiple, potentially different, data access networks must be accessed simultaneously. The selection of the access network, using a specific baseband and secondary SIM, is performed by the provided application. An additional authentication mechanism must be implemented between the app and secondary SE (or software based equivalent) to avoid other apps being able to transfer data using the application "sponsored" data connection. An existing software stack may be modified in different ways by a skilled person, depending mainly on the OS structure and hardware setup. Referring to figure 3a, at least at the application level 30 an application should be able to use an alternative radio. Further programming interfaces (both for authentication and user data routing) can be added at one or multiple levels 32, 33, 34 below. For example, a data routing service 32a, 33a can be added to assist routing of data for applications.

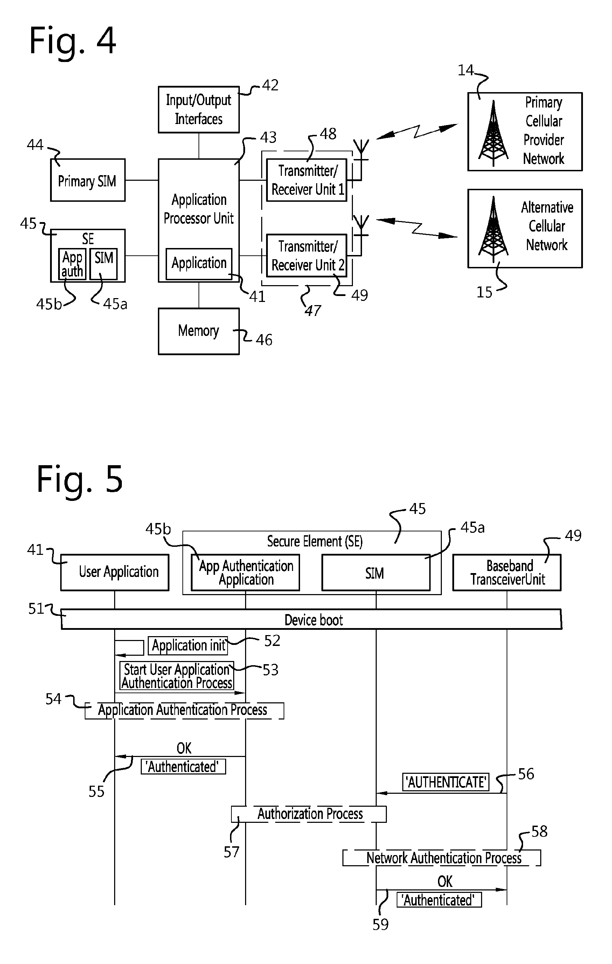

Figure 4 schematically shows a mobile communication terminal according to an embodiment of the invention. Two transceiver units (first unit 48 and second unit 49) are shown which are individually controlled by the application processor unit 43. The two (or more) transceivers can also form an integrated unit 47 (such as a SoC) that is controlled via a single control link. The first transceiver unit 48 can wirelessly connect to the default (or primary, or legacy) cellular provider 14, while the second transceiver unit 49 can, under control of an application 41 running on the application processing unit 43, wirelessly connect to an alternative cellular network 15, for example associated with an OTT provider. In an embodiment, the connections can be maintained simultaneously. Both connections can relate to the same (cellular) standard, or can relate to different standards (e.g. different cellular standards or cellular and Wi-Fi).

The terminal further comprises a slot for a primary SIM 44 and a second Secure Element 45. In the current example, the SE is an embedded UICC (eUICC) comprising an app authentication applications 45b and a SIM 45a. The terminal further comprises I/O interfaces 42 and memory 46. The memory can store computer instructions for application 41 which can be executed on the processor unit 43.

The SE 45 has two authentication functions: 1. Authentication to the alternative cellular network (via a network authentication element 45a, such as SIM 45a, and 2. Authentication with the application (via an application authentication element 45b, typically an application 45b on the SE). The application authentication element 45b authorizes the (SIM) network authentication element 45a for using the secondary transceiver unit for authentication to the alternative cellular network. The SE can have different form factors: it can be a standard SIM card in form factors known as 2FF, 3FF or 4FF. The SE can also be a piece of dedicated hardware embedded in the handset (eUICC), or it may even be a software based (vSIM/softSIM) solution.

Figure 5 schematically shows the two-stage authentication in more detail. This two-stage authentication can be performed in two different orders. In a first variant (not shown in figure 5), the SIM 45a triggers, on reception of an 'AUTHENTICATE' request, the App authentication application 45b that performs authentication with the user application 41 before allowing the SIM to proceed with the 'AUTHENTICATE' procedure. In a second variant, shown in figure 5, the user application 41 requests the App Authentication Application 45b to authenticate, and authorizes the SIM 45a to complete an 'AUTHENTICATE' transaction that is triggered by a Baseband Transceiver Unit 49. When the SIM 45a receives an 'AUTHENTICATE' request 56 it will interact with the App Authentication Application 45b that grants or blocks further processing of the authentication transaction. The SIM 45a will allow further processing of the 'AUTHENTICATE' request in the network authorization process 58, finalized with an acknowledgement 59 from the SIM 45a. Optionally, multiple authentication vectors or credits can be requested in one request. Authentication requests can be originated from the application side or network side. Requesting multiple vectors/credits at once has the advantage that it allows faster processing of authentication requests in the SE.

In summary, the user application 41 authenticates with the SE 45. Then an authorisation process 57 is triggered 56 from the Baseband Transceiver Unit 49 or the application processor 43, after which the usual network authentication 58 can take place. The authentication for both the user application and the network will typically involve a cryptographic function. The authentication involves exchange of messages between the application 43 processor and the SE 45. The authentication for the network can be based on the standard SIM authentication algorithms such as A3/A8, Milenage, AKA, AKA', etc. Authentication between application and SE can be done using the same or a similar algorithm, but also based on for example a PKI algorithm, username/password, PIN, One-Time-Password (OTP), etc.

This setup differs from 'regular' dual- or multi-SIM handsets in the way the baseband transceiver must support the setup of multiple simultaneous cellular data sessions.

As was mentioned before, generally the architecture of a conventional smart phone is setup in a way that the SIM is not directly accessible through the applications processor unit. In the setup according the invention, this access is enabled, either directly or indirectly via an interface of the transceiver units or transceiver SoC, and is needed for authentication of the application. One or both SIMs could be implemented in the *generic* way, but the authentication entity that allows the application to register to a specific network and transfer data, should be accessible from the application processor unit. Therefore, in an embodiment the second SE may be provided as comprising two separate physical or software-based entities.

Network resources can be managed differently according an embodiment. Therefore resource management software 32b, 33b may be used that monitors available access networks (this may be cellular or Wi-Fi) and whether applications need permanent access to specific resources. This method allows to set up schemes that permit 'dynamic mobility management', depending on used applications.

For example, a mobile device could maintain a first data connection (for example a 2G or 3G connection) at all times, and only establish a second data connection (for example a 4G connection) when an occurrence demands it. That occurrence could be an application wake-up trigger received via the first data connection. An example could be a media player that allows a user to browse through a selection of available media using a low bandwidth (first) connection, and establishes a high bandwidth (second) connection when the user selects media to play. Thus, using a resource manager 32b, 33b for establishing the second connection in response to the wake-up trigger, battery power is conserved (less intensive use of the transceiver) and network usage is reduced.

In another example, the mobile device maintains a low-speed connection (for example using a dedicated "machine-only" cellular network designed for Internet-of-Things appliances, for example proprietary networks using the 915 MHz spectrum or other licensed or unlicensed spectrums), in order to save power and cost. When a suitable trigger arrives via the low-speed network, an application detects the trigger and establishes the second connection (for example a highspeed 4G connection).

This resource manager software can be included in a user application, provided that the user application is able to authenticate with a SE in order to set up the second connection as needed. The resource manager software could also be included as a Operating System service 32b, 33b in the OS that runs on the application processor. The resource manager also allows that a secondary data session is triggered by sending a request via the primary data path. This trigger 'wakes up' an application that uses the secondary data path.

Another feature of this resource manager is that applications that run in the background and do not need to transfer data (idle mode), do not use hardware resources. Only when the user (or application itself) is active and needs to transfer data, the required transmitter/receiver unit is claimed.

The two mentioned methods above allow more efficient hardware usage (network resources availability and reduction of power consumption), and better mobility management.

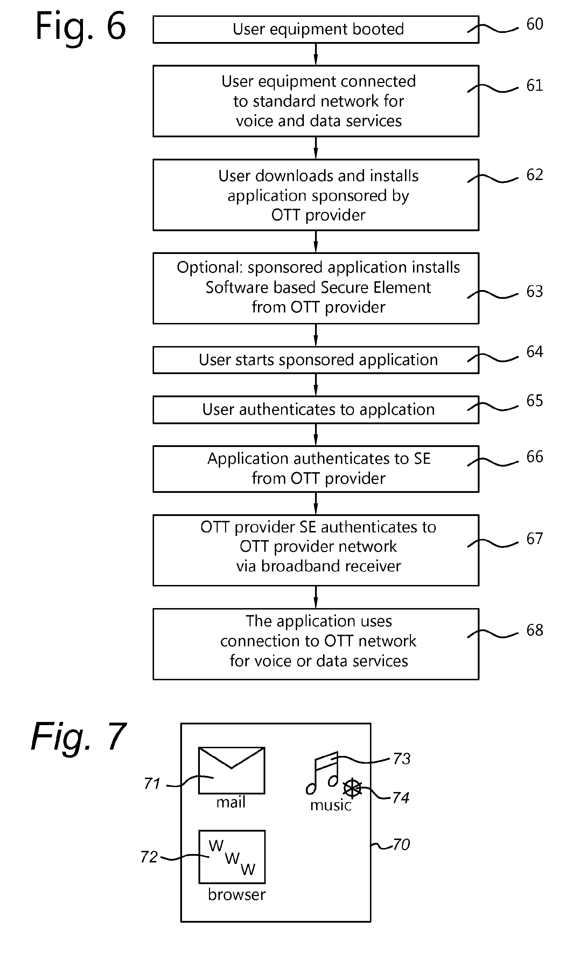

Figure 6 schematically shows a method of running a sponsored application according to an embodiment of the invention, the method comprising the following actions.

In action 60 the device is booted. After booting, a connection is made to a default network, for example using an included physical SIM in action 61. The user may download and install a sponsored application (action 62), provided for example by an OTT provider who has also made arrangements with network operators. As part of the installation process, in action 63 the application may install a software based equivalent of a Secure Element that includes functionality for network and application authentication and authorization. In case an (embedded) Secure Element is already present in the user equipment, the credentials for both authentication functions (application and network) will be sent to the SE in this step. Credentials for the application will optionally also be stored in the application (depending on the used authentication method).

The user then starts the application in action 64. In optional action 65, the user authenticates him or herself to the application. This can be based on a PIN code, a password, email address, or any other available means. The application provider can also decide to omit this authentication step.

The application will authenticate itself to the corresponding SE in action 65. This can be based on the authentication from the user in action 64, but it may also be based on authentication information that is coded into the application code or data.

In action 67, the OTT SE, with the aid of the suitable Operating System services, authenticates itself to the cellular network. This is the network from the provider with which the OTT application provider has made an agreement. The application then uses, in action 68, this network for e.g. voice and/or data services. Other applications are not able to use this particular connection, and can only use the default voice / data services.

Figure 7 schematically shows a user interface screen 70 according to an embodiment of the invention. The screen can be displayed on a touch panel or other display means. Three exemplary application icons are shown: an icon 71 for an email application, an icon 72 for a web browser application, and an icon 73 for a media player application, which is an application that is able to interact with an SE. The icon 73 has an additional user interface element, asterisk symbol 74, to indicate that the corresponding application is a sponsored application, enabled to establish a second data connection through interaction with an SE.

Through the added symbol 74, which is to be added to all icons for OTT sponsored applications, the user can thus easily determine if an application will use the default connection or a second (OTT) connection. Of course, the use of an asterisk is merely an example. Any graphical symbol can be used. In addition, another user interface element (e.g. use of colour, animated icon, audio effect, etc) can be used to distinguish sponsored applications from standard applications.

In the foregoing description of the figures, the invention has been described with reference to specific embodiments thereof. It will, however, be evident that various modifications and changes may be made thereto without departing from the scope of the invention as summarized in the attached claims.

In particular, combinations of specific features of various aspects of the invention may be made. An aspect of the invention may be further advantageously enhanced by adding a feature that was described in relation to another aspect of the invention.

It is to be understood that the invention is limited by the annexed claims and its technical equivalents only. In this document and in its claims, the verb "to comprise" and its conjugations are used in their non-limiting sense to mean that items following the word are included, without excluding items not specifically mentioned. In addition, reference to an element by the indefinite article "a" or "an" does not exclude the possibility that more than one of the element is present, unless the context clearly requires that there be one and only one of the elements. The indefinite article "a" or "an" thus usually means "at least one".

## Claims

1. A wireless communication device, comprising:
- a first means for receiving a first secure element, SE (44)
- a second means for receiving a second SE (45);
- an application processor (43) for executing user applications,
- a first transceiver unit (48) for connecting to a first wireless network (14) using the first SE
**characterized by**
- a second transceiver unit (49) for connecting to a second wireless network (15) using the second SE, wherein the application processor (43) is configured to support exchange of authentication messages between the user application (41) and the second SE (45).

2. The wireless communication device of claim 1, wherein the second SE (45) comprises an application authentication element (45b) and a network authentication element (45a), and the exchange of authentication messages between the user application (41) and the second SE (45) causes the application authentication element (45b) to authorise the network authentication element (45a) for connecting to the second wireless network (15).

3. The wireless communication device of claim 1 or 2, wherein the user application (41) is distinguished from other user applications by addition of a specific user interface element (74), such as a visual indicator, to an icon, text, or other user interface representation (73) of the user application (41).

4. The wireless communication device one of claims 1-3, wherein the application processor (43) is directly connected to the second SE (45) for interacting with the second SE.

5. The wireless communication device one of claims 1-3, wherein the application processor (43) is configured to interact with the second SE (45) via the first and/or second transceiver units (47, 48,. 49).

6. The wireless communication device of any one of the previous claims, wherein the connection to the first network (14) and/or the connection to the second network (15) is a data connection, in particular a packet-switched data connection.

7. The wireless communication device of any of the previous claims, wherein the first (44) and/or the second SE (45) to be received by the wireless communication device is one of a standard subscriber identity module, SIM, card, an embedded SE, such as an embedded UICC, eUICC, a Secure Digital (SD) card, or a software based equivalent such as a virtual/soft SIM, vSIM/softSIM.

8. The wireless communication device of any one of the previous claims, wherein the device is configured to maintain the connection to the second wireless network (15) simultaneously with the connection to the first wireless network (14).

9. The wireless communication device of any one of the previous claims, wherein the connection to the second wireless network (15) has a higher data transfer capacity than the connection to the first wireless network (14).

10. The wireless communication device of any one of the previous claims, wherein each of the wireless network connections is one of a second generation, 2G, third generation, 3G, fourth generation, 4G, or fifth generation, 5G, cellular connection, or any later generations.

11. The wireless communication device of any one of the previous claims, wherein the first or the second wireless connection is a Wireless Local Area Network, WLAN, or Wi-Fi connection.

12. The wireless communication device of any of the previous claims, wherein each of the at least two transceiver units is further configured to request authentication to one SE to register to a specific cellular network.

13. The wireless communication device of any of the previous claims, wherein the first and the second transceiver units (48, 49) form an integrated unit (47) that is controlled via a single control link.

14. A method for cellular network selection by a wireless communication device comprising at least two transceiver units (48, 49) and at least two secure elements, SEs, the method comprising the steps of:
- running an application on an application processor (43) of the wireless communication device;
- under the control of the application, authenticating at least one of the at least two SEs for connecting to a wireless communication network.

15. The method of claim 14, wherein the application is enabled to use the connection established under control of the application, and other applications are not enabled to use said connection.
